# EUROPEAN PATENT APPLICATION

(11) **EP 2 244 147 A2**
(43) Date of publication of application: **27.10.2010**
(21) Application number: 10160838.8
(22) Date of filing: 23.04.2010
(51) Int. Cl.: G05B 19/418

(54) **Utilizing sustainability factors for product optimization**

(30) Priority: 24.04.2009 US 429824
(71) Applicant: Rockwell Automation Technologies, Inc., Mayfield Heights, OH 44124 (US)
(72) Inventor: Walker, Marcia Elaine, Durham, NC 27713 (US); Kaufman, Philip John, Milwaukee, WI 53207-4089 (US)
(74) Representative: Grünecker, Kinkeldey, Stockmair & Schwanhäusser Anwaltssozietät

(57) **Abstract**

An industrial control system is provided. The system includes a processor to analyze one or more sustainability factors and a scoring component to assign a weight to the sustainability factors. An optimizer automatically adjusts a production process in view of the sustainability factors, the weight, and at least one of a recycling requirement, a carbon footprint, a procurement process, a shipping process, or a regulatory requirement.

## Description

### TECHNICAL FIELD

The claimed subject matter relates generally to industrial control systems and more particularly to methods that optimize manufacturing operations in view of various sustainability factors.

### BACKGROUND

Each step of a supply chain involves material. When used in manufacturing or business, each material typically has a specification. This specification is most often a written statement of an item's required characteristics, documented in a manner that facilitates its procurement or production and acceptance. These characteristics are typically divided into three categories: (1) physical, (2) functional, and (3) operational. The specification describes the criteria to which the material must conform in terms of quality, design, compatibility, performance, price, and so forth.

At the beginning of the supply chain, there is 'raw material.' An example is butter or eggs. Multiple raw materials converge within the production process to become 'intramaterials' - mixtures of raw material that are not yet, in and of themselves, finished goods, but that, because of the production process, no longer meet the specification of the ingoing raw materials. An example would be a mixture of butter and eggs - this mixture is a unique entity which has characteristics quite different from the ingoing material. Often these intramaterials also have a specification to which they must conform; once they conform, they can move to the next step in the production process. A combination of raw materials and/or intramaterials is eventually transformed into the finished good, which also has a specification. For example, the finished good might be a packaged chocolate chip cookie. The raw materials would be butter, eggs, sugar, flour, salt and chocolate chips as well as the packaging material. The intramaterials might have been: butter + eggs; butter mixture + sugar; flour + salt; sugar mixture + flour mixture; all mixtures + chocolate chips; the baked cookie; and finished good: the baked, packaged cookie.

Typically, specifications describe the color, weight, potency, size, odor, or similar physical characteristics of the products in each stage of the production process. The product information, including how much of which product to use, is contained on a document commonly referred to as the "Bill of Materials" or BOM. Similarly, work instructions are written out to describe precisely how to transform the material and the type of machinery to process the material. In the cookie example above, the work instructions might be: Beat butter + eggs for 5 minutes using stand mixer #1; and Bake for 15 minutes at 350 degrees in oven #3 and so forth. These work instructions are variously described as routings, standard operating procedures, workflow, and so forth. Together, the combination of the BOM and work instructions, create the "recipe" (also known by other names such as a production procedure).

In an automated factory, recipes can exist both in the automation layer, which typically controls machinery and other automated equipment, and the MES layer, which typically contains instructions that involve human interaction and manual instructions as well. Increasingly, these two layers also interact with a higher, ERP layer to connect to business-level systems. Some recipes, especially in regulated environments such as life sciences or food operations, also outline the necessary skills and training of the human resources interacting with the production process. These skill-sets can be managed and tracked via manual or automated procedures. When automated, the automated system will preclude operations from being performed by an unqualified person, thus leading to enhanced protections for quality and safety.

Similarly, some recipes outline the required parameters of the machine being used for production. Often a machine is 'qualified' or 'validated', or proven to operate according to certain standards. This qualification is maintained through testing and maintenance schedules. When performance is automated, the automation system will preclude operations from being conducted on an unqualified machine, thus leading to enhanced protections for quality and safety.

### SUMMARY OF THE INVENTION

The following summary presents a simplified overview to provide a basic understanding of certain aspects described herein. This summary is not an extensive overview nor is it intended to identify critical elements or delineate the scope of the aspects described herein. The sole purpose of this summary is to present some features in a simplified form as a prelude to a more detailed description presented later.

Systems and methodologies are provided for managing supply chain and production operations, where sustainability factors are employed to optimize the sustainability of a product and/or process. The Sustainability Factors can be utilized to extend a) the specification of materials and products b) the work instructions used to transform the products into finished material c) descriptors and other factors associated with the human resources performing production d) factors associated with the machines performing production and e) factors associated with the facility and utilities supply chain involved in production, such as type of electricity used (solar vs. wind vs. coal, for example). Ultimately, responsible manufacturers can optimize their operations to minimize their overall energy, environmental, and negative human/community impact, from raw material to finished goods, while maintaining quality, regulatory compliance, and customer satisfaction.

In one aspect, production can be optimized in the supply chain to enable recycling of materials. For example, depending on the destination of a product shipment, different packaging could be automatically selected for a product to align with the requirements and needs of the destination location (e.g., change packaging based on recycling regulations of destination). In another aspect, production is optimized in the supply chain based on carbon labeling. For example, production can be modified depending on an acceptable range of values for the carbon footprint of a destination location. In yet another aspect, optimization of procurement and shipping systems within the supply chain can be provided. In this aspect, automated purchasing decisions can be made to reduce the environmental impact of a given product line. In still yet another aspect, regulatory decision-making and implementation can be optimized in view of various sustainability factors that can be derived from a dynamic scoring system.

To the accomplishment of the foregoing and related ends, the following description and annexed drawings set forth in detail certain illustrative aspects. These aspects are indicative of but a few of the various ways in which the principles described herein may be employed. Other advantages and novel features may become apparent from the following detailed description when considered in conjunction with the drawings.

### BRIEF DESCRIPTION OF THE DRAWINGS

Fig. 1 is a schematic block diagram illustrating an optimization component to control production and procurement processes in view of various sustainability factors.

Fig. 2 is a flow diagram illustrating a method to alter product packaging in view of determined recycling requirements.

Fig. 3 is a flow diagram illustrating a method for optimizing production in view of detected carbon footprint ranges.

Fig. 4 is a flow diagram illustrating a method for optimizing procurement and shipping systems in view of detected environmental factors.

Fig. 5 is a flow diagram illustrating a method for optimizing regulatory compliance in view of various sustainability factors.

Fig. 6 is a block diagram illustrating a dynamic scoring system for sustainability factors.

Fig. 7 is a schematic block diagram illustrating a manufacturing model that is associated with sustainability-factor associated source data to enhance the efficiencies of an industrial process.

Fig. 8 is a diagram illustrating a model specification that has been associated with sustainability factors.

Fig. 9 is a diagram illustrating an example bill of material having associated sustainability factors.

Fig. 10 is a diagram illustrating example manufacturing models that can be associated with sustainability factors.

Fig. 11 is a diagram illustrating an energy monitoring component.

### DETAILED DESCRIPTION OF THE INVENTION

An industrial control system is provided that automatically adjusts supply-chain processes in view of dynamically scored sustainability factors. In one aspect, an industrial control system is provided. The system includes a processor to analyze one or more sustainability factors and a scoring component to assign a weight to the sustainability factors. An optimizer automatically adjusts a production process in view of the sustainability factors, the weight, and at least one of a recycling requirement, a carbon footprint, a procurement process, a shipping process, or a regulatory requirement.

It is noted that as used in this application, terms such as "component," "module," "source, " and the like are intended to refer to a computer-related entity, either hardware, a combination of hardware and software, software, or software in execution as applied to an automation system for industrial control. For example, a component may be, but is not limited to being, a process running on a processor, a processor, an object, an executable, a thread of execution, a program and a computer. By way of illustration, both an application running on a server and the server can be components. One or more components may reside within a process or thread of execution and a component may be localized on one computer or distributed between two or more computers, industrial controllers, or modules communicating therewith.

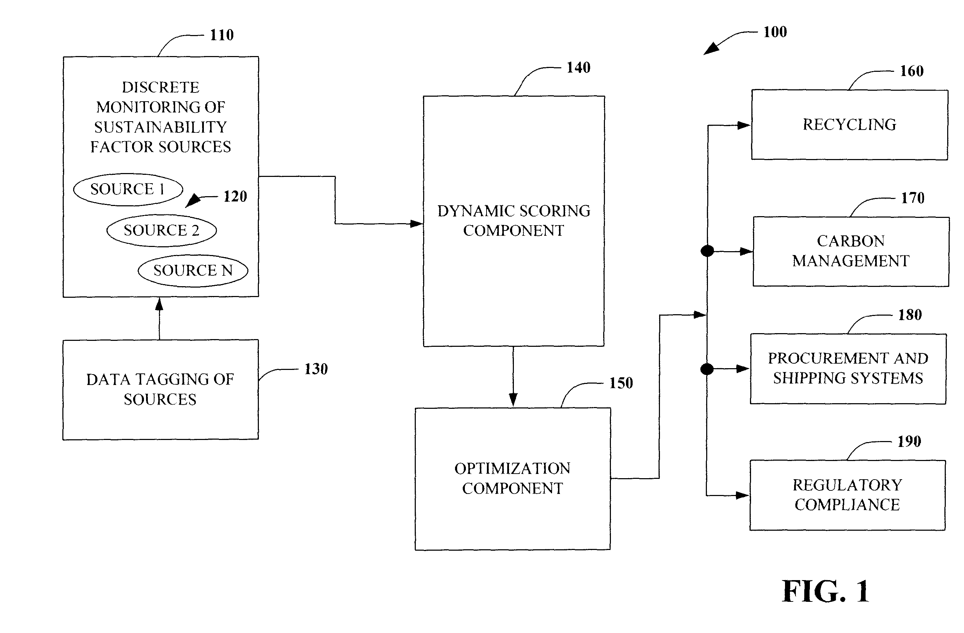

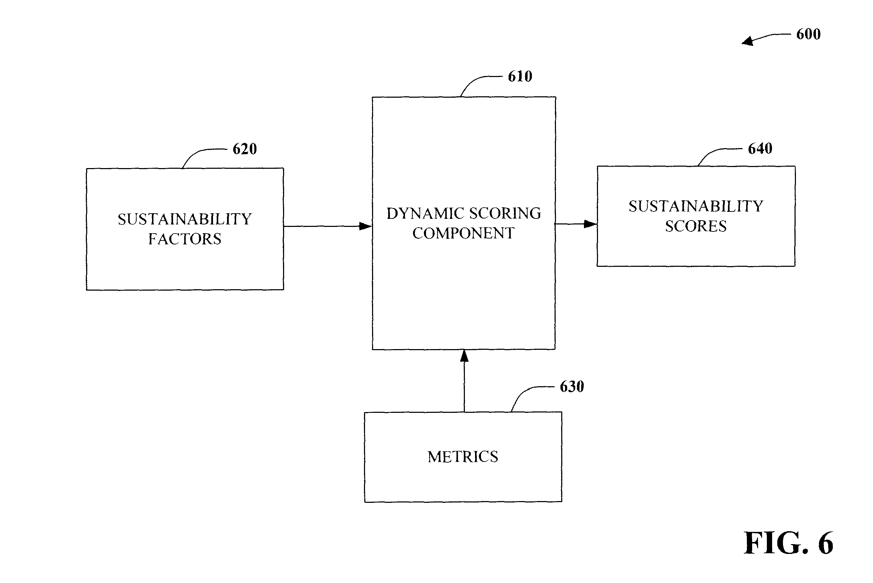

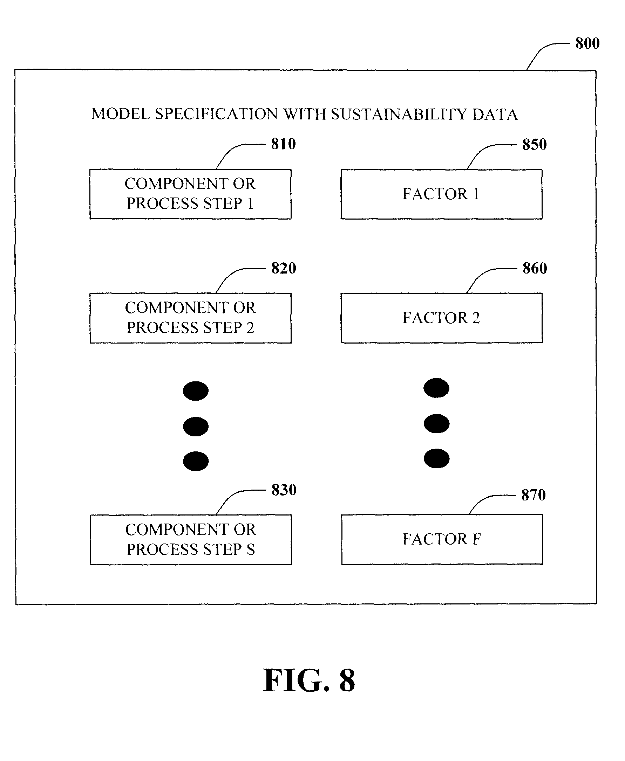

Referring initially to **Fig. 1****,** a system 100 illustrates an optimization component to control production and procurement processes in view of various sustainability factors. The system 100 includes a plurality of discrete monitors 110 that are stationed throughout an industrial system or process and are employed to collect data from various sustainability-factor associated data sources 120. The sustainability-factor associated data sources 120 can be from various portions of a process and related to such factors as energy or waste for example and are described in more detail below with respect to Fig. 8. A tagging component 130 is provided to label or mark the collected source data 120 as to which portion of an industrial process the data is associated with. For example, in a batch process, the source data 120 may be tagged to indicate which pipe or valve a recipe component was transported across and how much energy such pipe or valve consumed as part of the process. From another point of view, the pipe or valve may be attributed to the amount of waste associated with a portion of the batch process and in its own manner, reflect a type of energy or sustainability factor that is attributable to the respective process. Sustainability factors can also include factors outside the respective process such as environmental regulations, carbon requirements, recycling considerations, and the like. In a discrete process, where items may be assembled in a parallel or serial manner, the sources 120 may be tagged to indicate a sustainability factor for the various components of the discrete process (e.g., discrete process A building an engine lists various components of the engine where the tagged data from the sources 120 is associated with the engine components). A dynamic scoring component 140 is provided to rate or score the sustainability factors and is described in more detail below with respect to Fig. 6.

An optimization component 150 processes sustainability data and optimizes various portions of a production, shipping, or procurement process in view of the data. In one aspect, factors affecting the sustainability score of a unit/product/batch occurs as part of pre-and post-production processes. By extending the use of the factors into the supply chain, optimization of the overall supply chain for sustainability can be enabled. One optimization that can be provided is shown at 160 where production in the supply chain is optimized to enable responsible recycling. Thus, a Sustainability Optimization System can be optimized to account for the availability of recycling facilities in the destination region for the product. For example, using a modeling engine (not shown) and associated data, the system could determine that for a particular manufacturing run of soaps (or other products) within a container, that plastic recycling is available in the ultimate destination of the soaps for Batch A but not for Batch B. The production system could then select the recipe for Batch A that uses plastic packaging but the recipe for Batch B that uses paper packaging. As can be appreciated, a plurality of different packaging options can be automatically selected based on the detected recycling needs of the target shipping location.

Proceeding to 170, carbon management can be optimized. For example, optimizing production in the supply chain for carbon labeling. In the context of carbon labeling and carbon taxes, factors outside of the production process itself can impact the ultimate cost and profitability of the end product. Production using resources from various regions, or targeted for shipment to various regions, can be automatically modified depending upon the acceptable range of detected values for the carbon footprint of the end product. For example, if a North American company were to produce a chocolate bar for worldwide distribution, they might have a choice of using sugar in their warehouse that came from the a neighboring state vs. sugar that came from Africa. Should the end product be destined for shipment to a European country that, in a future state, imposes carbon taxes, the modeling system could determine: Which batch of raw ingredients or; which manufacturing method and/or; which shipping method provides the lowest overall carbon footprint for the candy on the shelf in Europe, for example.

At 180, optimization of procurement and shipping systems within the supply chain are provided. In the example scenario described above, a global manufacturer could determine that to reduce the overall environmental impact of its product line, facilities in Russia should receive African sugar but facilities in Chicago should receive the Brazilian sugar. Procurement systems could then be optimized in alignment with production systems to facilitate purchases and shipments were initiated accordingly. By extending the model further, shipments and additional factors could be aligned with environmental factors such as weather, to minimize environmental impact. For example, by coordinating with weather systems, truck shipments in affected regions could be delayed during 'ozone alert' times or shifted to rail transport. Again, the overall objective could be to optimize production while minimizing environmental impact. Advanced modeling could ascertain that under certain conditions, high ozone days are likely to occur in an upcoming week, and thus the manufacturer should pre-order those materials that require truck shipments to avoid increasing the ozone impact. Similarly, by coordinating with weather systems, production and shipping could be optimized to take advantage of 'hotter' or 'colder' routes for products requiring controlled storage and transport, such as ice cream, for example.

At 190, regulatory compliance is considered where optimizing regulatory decision making and implementation can be provided. As regulatory oversight of issues related to sustainability, such as safety compliance, emissions monitoring, carbon taxes, water-use issues, and so forth, increases, so does the complexity of administering these regulations on a global basis. The data and processes from a Sustainability Optimization System could include interconnectivity with a database containing regulatory rules to simplify regulatory decision making and oversight. For example, a particular government authority may desire to encourage the use of solar power. Merely having energy usage information on a label would be insufficient to administer a tax on a product, as that would not indicate what type of energy was used. By associating a Sustainability Factor indicating the type of energy used for production, in addition to other relevant Sustainability Factors, manufacturers could optimize production to take maximum advantage of government rebates and other incentives while minimizing the risk of adverse judgments. Similarly, regulatory bodies could optimize tax administration and administration of other regulations to drive the desired behavior to keep their economies and environments responsible and sustainable.

In general, though a lot of attention has been paid to the value of sustainability - including environmental, energy, and safety factors - often the factors that impact sustainability have been viewed as external to the products and/or processes themselves. By integrating these factors into the full supply chain, a life-cycle view of the impact of the product can be achieved. Sustainability factors can be associated with the product, the process, or a combination. The Sustainability factors can be used to extend a) the specification of materials and products b) the work instructions used to transform the products into finished material c) descriptors and other factors associated with the human resources performing production d) factors associated with the machines performing production e) factors associated with the facility and utilities supply chain involved in production, such as type of electricity used (solar vs. wind vs. coal, for example) and f) scheduling information. Sustainability factors can be created using known industry standards, or, individuals can develop their own factors in order to track and measure those characteristics that are of particular importance to them. A table describing sample sustainability factors is described below with respect to Fig. 8. However, as a sustainability factor could be self-created to account for factors unique in importance to an individual, company, retailer, region, and so forth, thus, it is to be appreciated that the table is not an all-inclusive list. In another aspect, a system for controlling an industrial process is provided. The system includes means for scoring (scoring component 140) one or more sustainability factors and means for weighting the sustainability factors (see metrics 630 in Fig. 6 below). The system also includes means for adjusting (optimization component 150) a production process in view of at least one of a recycling requirement, a carbon footprint, a procurement process, a shipping process, or a regulatory requirement.

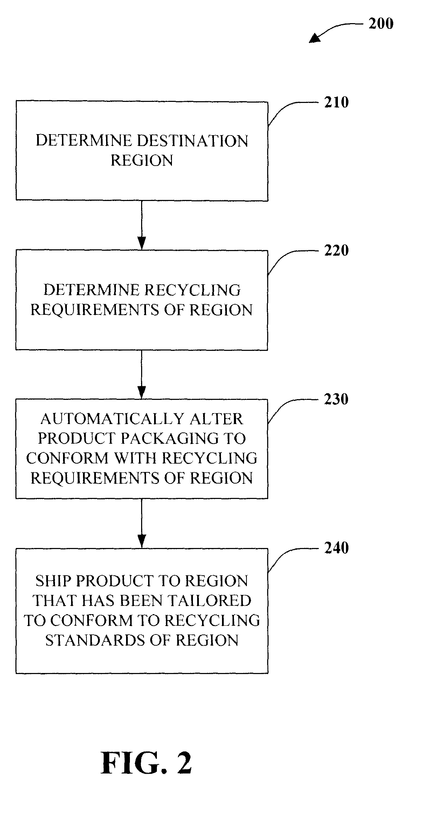

**Figs. 2-5** are flow diagrams illustrating methods for optimizing production and shipping processes in view of sustainability factors. While, for purposes of simplicity of explanation, the methodologies are shown and described as a series of acts, it is to be understood and appreciated that the methodologies are not limited by the order of acts, as some acts may occur in different orders or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology as described herein.

**Fig. 2** illustrates a method 200 to alter product packaging in view of determined recycling requirements. Proceeding to 210, a destination region is determined for a potential product. At 220, parameters for the region's recycling requirements are determined. These could include the types of material to be employed in packaging such as plastic, aluminum, paper, biodegradable, and so forth. At 230, after determining the recycling requirements, a production process is automatically adjusted in view of the requirements. For example, if the current process is to bottle a product in an aluminum container, and the recycling requirement is for plastic containers, batch processes can be automatically re-routed to a packaging line that employs plastic containers rather than aluminum. As can be appreciated, a plurality of such routing decisions can be performed depending on the number of recycling options supported. At 240, products are shipped to the destination locations with the appropriate packaging that has been tailored for the recycling requirements of the location.

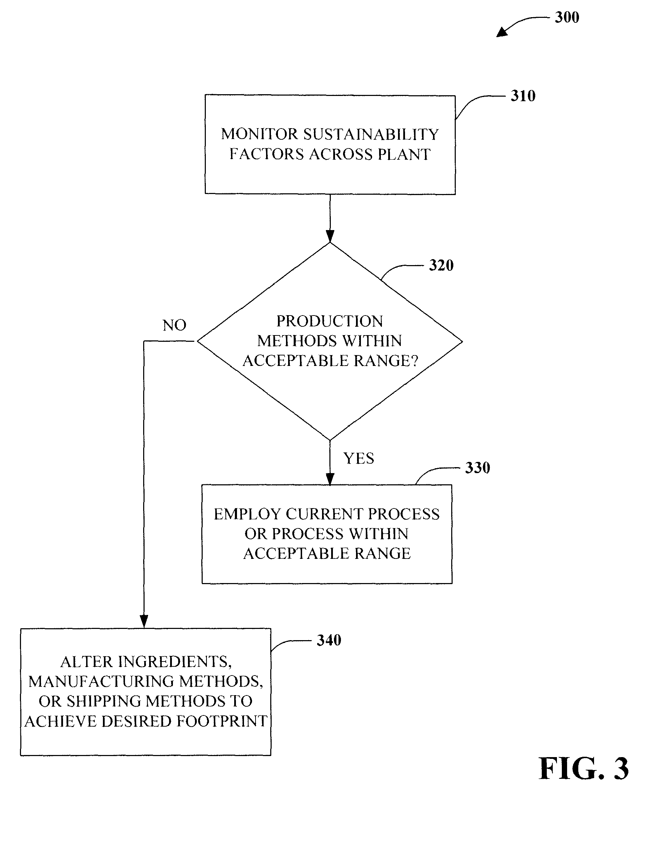

**Fig. 3** illustrates a method 300 for optimizing production in view of detected carbon footprint ranges. In this aspect, sustainability factors are monitored at 310 and as previously described. At 320, a decision is made as to whether or not current production methods are within an acceptable range to meet the desired carbon footprint. If the current range is acceptable at 320, the process proceeds to 330 and employs current production methods that satisfy the respective ranges. If the current production is not within acceptable ranges at 320, the process proceeds to 340 ingredients may be altered, shipping methods may be altered, and/or manufacturing methods may be altered to achieve desired carbon footprint levels. As noted previously, factors outside of the production process itself can impact the ultimate cost and profitability of the end product. Production using resources from various regions, or targeted for shipment to various regions, can be automatically modified depending upon the acceptable range of detected values for the carbon footprint of the end product. Thus, modeling can determine: which batch of raw ingredients or; which manufacturing method and/or; which shipping method provides the lowest (or suitable) overall carbon footprint for a particular product and/or destination.

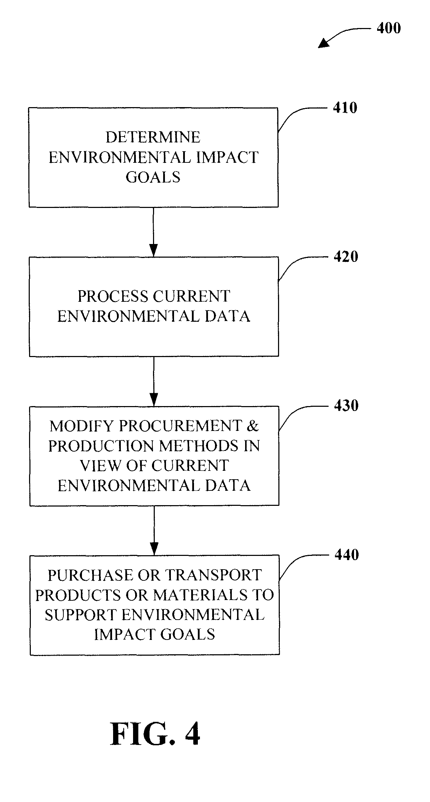

**Fig. 4** illustrates a method 400 for optimizing procurement and shipping systems in view of detected environmental factors. At 410, environmental factors are considered such as weather or other climate goals that may be desired for a particular product or process. At 420, current environmental data is processed. Thus, it may be determined that a particular location is cooler than projected thus a different type of shipping or packaging could be employed. At 430, procurement of supplies and/or production methods are adjusted in view of current environmental data. At 440, material or products are purchased or transported to support the environmental goals determined at 410. As noted previously, shipments and additional factors could be aligned with environmental factors such as weather, to minimize environmental impact. For example, by coordinating with weather systems, truck shipments in affected regions could be delayed during 'ozone alert' times, or shifted to rail transport. The overall objective could be to optimize production while minimizing environmental impact. Advanced modeling could ascertain that under certain conditions, high ozone days are likely to occur in an upcoming week, and thus the manufacturer should pre-order those materials that require truck shipments to avoid increasing the ozone impact. Similarly, by coordinating with weather systems, production and shipping could be optimized to take advantage of 'hotter' or 'colder' routes for products requiring controlled storage, for example.

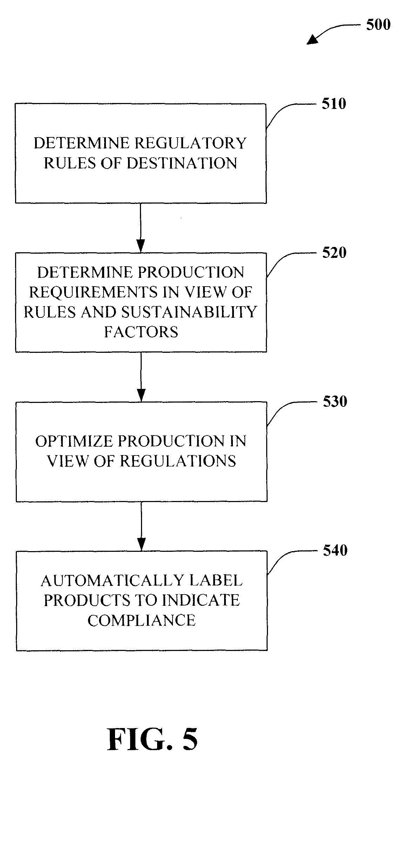

**Fig. 5** illustrates a method 500 for optimizing regulatory compliance in view of various sustainability factors. Proceeding to 510, regulatory rules are determined for a destination location. These can include safety compliance, emissions, carbon taxes, in addition to other sustainability factors. At 520, production requirements are determined in view of the rules and related sustainability factors. At 530, production is optimized in view of the regulations. This can include manufacturing with alternative energy sources in order to meet some incentive offered by a regulating body. At 540, labels can be automatically updated to reflect compliance with regulations and sustainability factors. As noted previously, data and processes from a sustainability optimization system could include interconnectivity with a database containing regulatory rules to simplify regulatory decision making and oversight. For example, a particular government authority may desire to encourage the use of solar power. Merely having energy usage information on a label would be insufficient to administer a tax on a product, as that would not indicate what type of energy was used. By associating a sustainability factor indicating the type of energy used for production, in addition to other relevant sustainability factors, manufacturers could optimize production to take maximum advantage of government rebates and other incentives while minimizing the risk of adverse judgments. Similarly, regulatory bodies could optimize tax administration and administration of other regulations to drive the desired behavior to keep their economies and environments responsible and sustainable.

**Fig. 6** illustrates a dynamic scoring system 600 for sustainability factors. The system 600 includes a dynamic scoring component 610 that processes one or more sustainability factors 620 and scoring metrics 630. Upon processing of the factors 620 and metrics 630, one or more sustainability scores 640 are generated that can be employed to automatically adjust productions shipping, manufacturing methods, product procurement, packaging, and/or labeling. The use of metrics 640 can enable the calculation of a dynamic sustainability score for each product/method such as a unit or batch perspective, for example. The sustainability score 640 can be the result of an algorithm to calculate the optimal result from desired metrics 630 to result in the 'most sustainable' product or process for the end user.

This score 640 can be an individual value, a combinatorial value, a multi-factorial value, or a weighted value, for example. For example, a given individual may care about a single value, such as the overall carbon impact, or emissions, for a given product. That value might be "3.3 metric tons," for example. Another user, however, might be concerned about emissions as well as the use of child labor. Use of child labor might be expressed as a 'true/false' value, such as "If child labor is used, the value = 1, if not, the value = 0" Thus the sustainability score 640 for the product might be: 3.3 metric tons + 0 child labor = Overall value of 3.3. However, "weighted" values might also be used, as described below. The consumer's intent in these examples is to have the lowest environmental and social impact. Thus, he or she seeks the lowest Sustainability Score:

| | Factor | Value or Range of values | Weight* |
|---|---|---|---|
| A | Safety performance: Recordable Case Rate (RCR) (lower is better) | 0-10 | 30 |
| B | Water use (gallons) | # of gallons | 20 |
| C | Packaging (Recyclable yes/no) | 1=yes, 0=no | 10 |

| | | | |
|---|---|---|---|
| Note: to differentiate in importance, a wide range of values for weighted scales can be used, such as 10, 20, 30, vs. 1, 2, 3, for example. | | | |

In the example above, the consumer's primary concern is the safety performance of the company that made the product to be purchased. Thus, to determine their sustainability score 640 the calculation could be: Find a bottle of wine whose sustainability score is: *30***A*+*20***B*+*10***C*. Thus, available bottles of wine could be presented to the consumer with the following algorithm:

| **Product** | **Safety (RCR)** | **Water Use (gallons)** | **Recyclable Packaging (1=yes, 0=no)** | **Sustainability Score** |
|---|---|---|---|---|
| Chardonnay: | 1.4 | 40 | 0 | =(30*1.4)+(20*40)+(10*0)=**842** |
| Chablis: | 3 | 20 | 1 | =(30*3)+(20*40)+(10*1)=**900** |

The consumer could choose the Chardonnay, as the weighted score would indicate that by balancing the factors of importance to them - with safety performance of the employer being more important - the Chardonnay is thus the better choice. However, another consumer - from a drought prone area, perhaps - might find water usage to be of most importance, and thus assign the sustainability factors 620 different weights.

| | Factor | Value or Range of values | Weight* |
|---|---|---|---|
| A | Safety performance: Recordable Case Rate (RCR) (lower is better) | 0-10 | 10 |
| B | Water use (gallons) | # of gallons | 30 |
| C | Packaging (Recyclable yes/no) | 1=yes, 0=no | 20 |

This can result in a different sustainability scoring, reflective of the consumer concerns.

| **Product** | **Safety (RCR)** | **Water Use (gallons)** | **Recyclable Packaging (1=yes, 0=no)** | **Sustainability Score** |
|---|---|---|---|---|
| Chardonnay: | 1.4 | 40 | 0 | =(10*1.4)+(30*40)+(20*0)=**1214** |
| Chablis: | 3 | 20 | 1 | =(10*3)+(30*20)+(20*1)=**650** |

Thus, for this consumer, the Chablis is the better choice.

Production modulation can be applied to implement production while facilitating the best sustainable return. In application, the sustainability score 640 could be used for decision making related to:
- Supply chain management (Raw material to finished good to 'reverse supply chain')
- Industrial production
- Consumer Purchasing Decisions
- Regulatory oversight

A dynamic sustainability score (DSS) could accompany materials through their lifecycle from extraction to disposal/recycling adding up the cumulative sustainability impact of the steps completed, in a manner that is optimally customizable according to consumer-defined, manufacturer/company/organization-defined, or governmentally-defined weighting of sustainability factors 620.

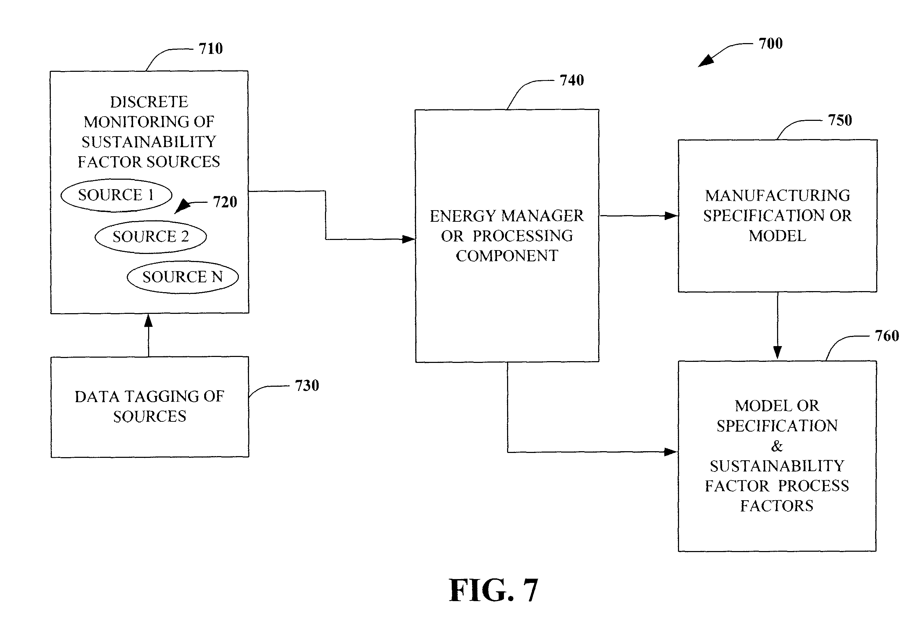

Referring to **Fig. 7****,** a system 700 illustrates illustrating a manufacturing model that is associated with sustainable source data to enhance the efficiencies of an industrial process. The system 700 includes a plurality of discrete monitors 710 that are stationed throughout an industrial system or process and are employed to collect data from various sustainable sources 720. The sustainable sources 720 can be from various portions of a process and related to such factors as energy or waste for example and are described in more detail below with respect to Fig. 8. A tagging component 730 is provided to label or mark the collected source data 720 as to which portion of an industrial process the data is associated with. For example, in a batch process, the source data 720 may be tagged to indicate which pipe or valve a recipe component was transported across and how much energy such pipe or valve consumed as part of the process. From another point of view, the pipe or valve may be attributed to the amount of waste associated with a portion of the batch process and in its own manner, reflect a type of energy or sustainability factor that is attributable to the respective process. In a discrete process, where items may be assembled in a parallel or serial manner, the sources 720 may be tagged to indicate a sustainability factor for the various components of the discrete process (e.g., discrete process A building an engine lists various components of the engine where the tagged data from the sources 720 is associated with the engine components). As shown, an energy manager or processor 740 collects the tagged data and links the tagged data with a manufacturing model 750 to produce a model or specification 760 that includes the discrete or batch process components that have been associated with the respective sustainability factors or source data 720. By associating energy or other sustainability factors with the manufacturing model or specification at 760, various efficiencies can be provided for and managed within the factory since each item's energy/sustainability component can now be accounted for and traced as a component of the respective discrete or batch process.

In general, the system 700 sustainability factors such as energy are monitored throughout a plant or process and associated with the model 750 such as a bill of material in order to increase plant efficiencies. Automated monitors 710 can receive data from a plurality of sustainability factor sources 720 that are distributed across an industrial process. Such processes can include discrete processes where automated assemblies occur (e.g., packaged assemblies) or can include batch processes where mixtures of various ingredients are combined to form a recipe or other combination of elements (e.g., chemical process, food process, beverage process, and so forth). As the respective processes are monitored at 710, sustainability factor sources 720 such as energy that is collected is tagged at 730 to indicate which portion of the discrete or batch process that the source contributed to. After tagging, the data is associated with the manufacturing model at 760 such as a bill of material (BOM) for example, where industrial managers or automated processes can then analyze the process for the components of energy that were attributed to the various portions of the respective process.

In contrast to prior systems that could only view energy from the overall sense of plant-wide consumptions, the source data that is associated with the BOM (or other model described below) can now be analyzed in real-time or via offline modeling to optimize and mitigate energy usage. For example, portions of a process may be rearranged to minimize overall energy usage (e.g., perform step C before step A in order to conserve energy from the reverse order of A and C). It is noted that various models other than BOM models can have associated sustainability factors. Such models include MRP models (material requirement planning), MES models (manufacturing execution system), ERP models (enterprise resource planning), programming models (e.g., ladder logic, SFC, batch program, function block), and so forth. In general, the system 700 allows extracting energy or other consumption data from the plant floor and correlating it to production output. This enables applying standard production modeling tools for production energy and emission forecasting and optimization, while extending the existing facility demand management system to include production, and lastly, link that system to the Demand Response and Smart Grid (DRSG), as well as, Cap and Trade systems, for example.

It is noted that components associated with the system 700 can include various computer or network components such as servers, clients, controllers, industrial controllers, programmable logic controllers (PLCs), energy monitors, batch controllers or servers, distributed control systems (DCS), communications modules, mobile computers, wireless components, control components and so forth that are capable of interacting across a network. Similarly, the term controller or PLC as used herein can include functionality that can be shared across multiple components, systems, or networks. For example, one or more controllers can communicate and cooperate with various network devices across the network. This can include substantially any type of control, communications module, computer, I/O device, sensors, Human Machine Interface (HMI) that communicate *via* the network that includes control, automation, or public networks. The controller can also communicate to and control various other devices such as Input/Output modules including Analog, Digital, Programmed/Intelligent I/O modules, other programmable controllers, communications modules, sensors, output devices, and the like.

The network can include public networks such as the Internet, Intranets, and automation networks such as Control and Information Protocol (CIP) networks including DeviceNet and ControlNet. Other networks include Ethernet, DH/DH+, Remote I/O, Fieldbus, Modbus, Profibus, wireless networks, serial protocols, and so forth. In addition, the network devices can include various possibilities (hardware or software components). These include components such as switches with virtual local area network (VLAN) capability, LANs, WANs, proxies, gateways, routers, firewalls, virtual private network (VPN) devices, servers, clients, computers, configuration tools, monitoring tools, or other devices.

It is further noted that the energy manager or processing component 740 is typically a server or computer system such as a batch server for industrial control systems. This can include processing components of a recipe that are subsequently executed by the processing or manager component 740, where the recipe identifies what aspects of a process are employed to produce a given recipe. In one example, an S88 standard provides models that define equipment control, procedure control, and activity. One aspect to implementing this and other standards is creating the ability to separate recipe development from equipment control through the use of an equipment module (not shown) that includes both actual equipment (e.g., tanks, pumps, etc.) and a software representation of the same hardware that includes all the process capabilities. For a given grouping of equipment, each process task is typically designated as a phase against that equipment module. Moreover, the S88 model can function as the manufacturing model 750 in one example for a respective model.

The model can include a process unit that can be broken down into its equipment modules, which represent all the possible tasks for that grouping, where the respective groupings can be associated with sustainable source data 720 that has been aggregated and tagged from across the factory or other facilities. Each unit can represent an organization of code in the controller designed by the process engineers that performs a task each time it is called. Each equipment module is also designed to accept one or more parameters. With material addition for example, two parameters specify which material to add and how much. Under the S88 standard, this represents the equipment model. The next step in the S88 standard is the procedural model, where the process engineer maps which equipment modules to call, in what order. This map is called an operation under the standard. For example, the process engineer creates a procedure that supports the ability first to purge the unit, add two materials, mix, react, and then transfer out. This becomes the foundation of a recipe template which can be common to different products, but differentiated by the parameters for each phase. Under this model, the parameters or formulation can be managed independently of operation templates. The process engineers create a family of templates to cover multiple arrangements of equipment usage. The formulators then create parameter sets. At runtime, the proper operation can be matched up with the proper formula set to create an S88 control recipe that can be executed against the equipment. It is to be appreciated procedural models other than S88 can also be employed. Thus, each component of the S88 model can be mapped and associated with a collected piece of sustainability factor source data 720 and ultimately generated as a model or specification that is tagged at 760 with the items of collected source data.

Turning now to **Fig. 8****,** a model specification 800 is provided that has been associated with sustainability factors. The specification 800 includes one or more components or process steps 810-830, where components may typically relate to a discrete manufacturing process and process steps relate to a batch manufacturing process. Some specifications 800 may include a hybrid where discrete processes and batch process are identified on the same specification. In addition to the component or process steps 810-830, the specification 800 includes one or more sustainability factors 850-870. Such factors 850-870 may be associated with a singular component or process step or a single factor can be associated with a subset of component or process steps. Example sustainability factors 850-870 can include energy or waste factors or include other factors such as illustrated in the example table below:

| **Example Sustainability Factors** | | | | | |
|---|---|---|---|---|---|
| Planet | | People | | Profit | |
| | | | | | |
| • | Water usage | • | Diversity factors (employment of | • | Utilities costs, including demand charges |
| • | Expected lifetime | | | | |
| | energy use of the product | | minorities etc.) for the employer | • | Marketing/ end user appeal (e.g., package design A tested better than package design B and is expected to be more profitable) |
| • | Expected energy use of the *process* | • | "Training" score-skilled vs. unskilled labor | • | Any financial measurement impacting the cost or profitability of a product |
| • | TYPE of energy used for manufacturing (solar, wind, nuclear, etc) | • | Use of union vs. non- union labor | | |
| • | Carbon emissions | • | Fair labor practices | | |
| • | "Recyclability", e.g., of packaging | • | LWDCR: Lost Work Day Case Rate (Work related injuries and illnesses that result in the employee not being able to perform work; cases per 100 employees) | | |
| • | "Waste" factor (for product and process) | • | LWDR: Lost Work Day Rate (Measure of severity by accounting for the number of days lost due to work related injuries and illnesses; cases per 100 employees) | | |
| • | Any other factor which relates to the environmental impact of a product or process | • | RCR: Recordable Case Rate (Recordable cases includes any work related injury or illness above a first aid) | | |
| | | • | Any other factor which relates to the safety performance of a product, machine, process, organization, etc. | | |

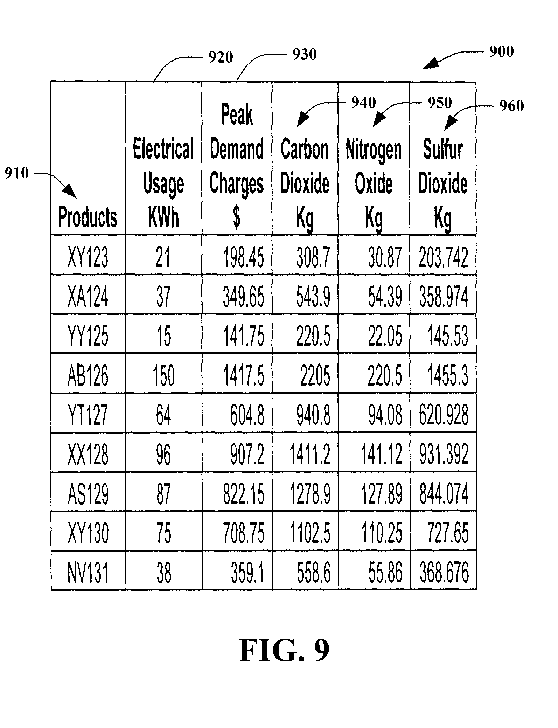

In some cases, the product itself may be associated with a factor as illustrated in **Fig. 9****,** where various products outlined in an example bill of material 900 in a left column 910 are associated with example sustainability factors such as electrical usage 920, peak demand 930, carbon dioxide 940, nitrogen oxide 950, and sulfur dioxide 960. Every day manufactures make scheduling decisions based on the availability of materials and high cost of labor. As energy prices rise, they will need to add energy to their scheduling decisions. Today, the wrong scheduling choices are costing producers tens, if not hundreds, of thousands of dollars in demand penalties and tariffs. Some penalties stay in place for upwards of 12 months.

Automated production lines can monitor some level of energy usage for startup profiles, maintaining recipe optimization, or for regulatory compliance. Manufacturers could, by applying various monitoring components, have the ability to make scheduling, forecasting and optimizing choices against energy demands through the use of standard production simulation tools. They could manipulate schedules to move orders that consume large amounts of energy to off peak pricing (load leveling). Also, in areas where energy has been de-regulated, manufactures will be able to make wiser choices based on manufacturing schedules.

Energy monitoring on the production floor can be tied to an energy tracking software package and correlate production output to the energy consumed. Energy could be metered and the empirical results could be added to the production Bill of Material (BOM). This allows the use of standard production simulation and forecasting tools, as well as, lean six sigma tools to optimize production against additional variables such as energy, rate schedules, and emissions. Fig. 9 shows an example of electricity data at 910 and 920 extracted from the BOM 900.

Production process simulations performed to analyze labor could be adjusted to analyze energy consumption just by exchanging KWh for minutes, for example. Empirical energy data could be used to optimize energy consumed against products per hour. Lean tools such as value stream mapping could mitigate not just labor waste but energy waste in a manufacturing process. Higher output generally has a negative impact on energy consumption.

Production tools for material forecasting can be used for energy forecasting when energy is added to the BOM 900. Manufacturing can forecast demands on infrastructure such as compressed air, steam, electricity, natural gas, and water, for example. Rates with utility brokers in unregulated areas could be negotiated more accurately. Production emission rates can be calculated and applied to the BOM 900. Again, allowing standard production forecasting tools to forecast emission against Cap and Trade regulations, for example. Energy information on the BOM 900 can aid in prioritizing production schedules to load level demand. Adjusting schedules based on peak demand times can reduce the overall cost of energy consumed.

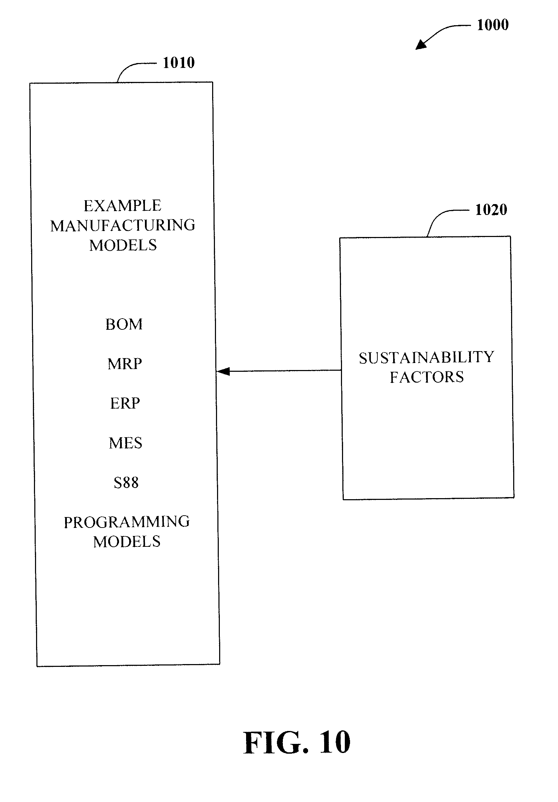

Referring now to **Fig. 10****,** a system 1000 illustrates example manufacturing models 1010 that can be associated with sustainability factors 1020. As noted previously, the models 1010 can include a bill of material. Another model 1010 can include a material reservation system model (MRP). In general, an MRP system ensures materials and products are available for production and delivery to customers. This includes maintaining the lowest possible level of inventory along with planning manufacturing activities, delivery schedules and purchasing activities. Thus, any type of specification that is generated by the MRP system can be associated with the sustainability factors 1020. Another type of model includes an enterprise resource and planning system (ERP). Enterprise resource planning (ERP) is a company-wide computer software system used to manage and coordinate resources, information, and functions of a business from shared data stores. An ERP system has a service-oriented architecture with modular hardware and software units or "services" that communicate on a local area network. The modular design allows a business to add or reconfigure modules while preserving data integrity in a shared database that may be centralized or distributed. Still yet another model includes a manufacturing execution system (MES). A manufacturing execution system (MES) is a control system for managing and monitoring work-in-process on a factory floor. An MES tracks manufacturing information in real time, receiving up-to-the-minute data from robots, machine monitors and employees. As noted previously, another type of model 1010 that can be employed includes an S88 type model. Still yet other models for associating with sustainability factors include programming models which can include ladder programs, SFC programs, functions block programs, and other control programs, for example.

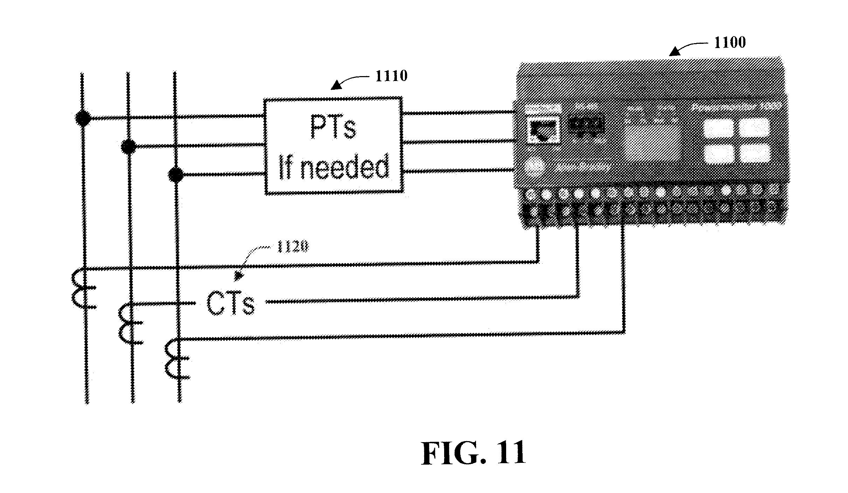

**Fig. 11** illustrates an example energy monitoring component 1100. Energy monitoring components 1100 can come in various packages and be designed to monitor a plurality of different sustainability factors. In this example the monitor 1100 is monitoring potential transformers 1110 or current transformers 1120 for energy usage in a process. Monitoring components can include smart devices that can monitor and tag energy data as it is employed in various parts of a process. Such data could be collected and tagged in a device network for example before being transferred to some high level network such as a control network or an Ethernet/Internet, for example.

The subject matter as described above includes various exemplary aspects. However, it should be appreciated that it is not possible to describe every conceivable component or methodology for purposes of describing these aspects. One of ordinary skill in the art may recognize that further combinations or permutations may be possible. Various methodologies or architectures may be employed to implement the subject invention, modifications, variations, or equivalents thereof. Accordingly, all such implementations of the aspects described herein are intended to embrace the scope and spirit of subject claims. Furthermore, to the extent that the term "includes" is used in either the detailed description or the claims, such term is intended to be inclusive in a manner similar to the term "comprising" as "comprising" is interpreted when employed as a transitional word in a claim.
**The following is a list of further preferred embodiments of the invention:**
Embodiment 1: A recycling method, comprising:
   automatically determining a destination region;
   automatically determining recycling requirements associated with the region; and
   dynamically altering an automated packaging process in view of the recycling requirements.
Embodiment 2: The method of embodiment 1, further comprising shipping a product to a region, where the product has a package that is automatically tailored to conform to the recycling requirements of the region.
Embodiment 3: The method of embodiment 1, further comprising employing one or more sustainability scores to alter the automated packaging process.
Embodiment 4: A production method for managing carbon footprints, comprising:
   determining a range of values for a desired carbon footprint;
   analyzing product ingredients, product manufacturing methods, or product shipping methods in view of the desired carbon footprint; and
   automatically adjusting an automated manufacturing process in view of the desired carbon footprint.
Embodiment 5: The method of embodiment 4, further comprising optimizing the automated manufacturing process for a lowest possible carbon footprint.
Embodiment 6: The method of embodiment 4, further comprising generating a label that indicates the carbon footprint.
Embodiment 7: The method of embodiment 4, further comprising analyzing one or more sustainability scores to adjust the automated manufacturing process.
Embodiment 8: A method to optimize procurement and shipping systems within a supply chain, comprising:
   determining an environmental impact for products manufactured on an automated product line;
   analyzing current environmental conditions or models that are associated with destination locations for the products; and
   automatically adjusting a procurement method or a shipping method in view of the current environmental conditions.
Embodiment 9: The method of embodiment 8, further comprising generating product shipments in view of weather conditions to mitigate environmental impacts.
Embodiment 10: The method of embodiment 9, further comprising employing one or more sustainability scores to determine environmental impacts.
Embodiment 11: A method to manage regulatory compliance, comprising:
   automatically analyzing one or more sustainability factors;
   automatically analyzing one or more regulations in view of the sustainability factors; and
   dynamically adjusting a production process in order to substantially comply with the regulations.
Embodiment 12: The method of embodiment 11, further comprising automatically altering a product label to indicate compliance with the regulations.
Embodiment 13: The method of embodiment 11, further comprising automatically adjusting the production process in order to realize a regulatory incentive or rebate.
Embodiment 14: The method of embodiment 11, further comprising automatically applying a score to the sustainability factors.
Embodiment 15: An industrial control system, comprising:
   a processor to analyze one or more sustainability factors;
   a scoring component to assign a weight to the sustainability factors; and
   an optimizer to automatically adjust a production process in view of the sustainability factors, the weight, and at least one of a recycling requirement, a carbon footprint, a procurement process, a shipping process, or a regulatory requirement.
Embodiment 16: The system of embodiment 1, the processor analyzes a manufacturing model that includes a bill of material, an MRP model (material requirement planning), an MES model (manufacturing execution system), an ERP model (enterprise resource planning), an S88 model, or a programming model.
Embodiment 17: The system of embodiment 16, further comprising a demand response component that employs the manufacturing model to facilitate energy management.
Embodiment 18: The system of embodiment 16, further comprising a simulation component to manage energy in accordance with the manufacturing model.
Embodiment 19: The system of embodiment 15, the sustainability factors includes water usage, expected energy use, a type of energy used, a carbon emission, a recyclability factor, an environmental impact factor, a safety factor, or a utility demand factor.
Embodiment 20: A system for controlling an industrial process, comprising:
   means for scoring one or more sustainability factors;
   means for weighting the sustainability factors; and
   means for adjusting a production process in view of at least one of a recycling requirement, a carbon footprint, a procurement process, a shipping process, or a regulatory requirement.

## Claims

1. A recycling method, comprising:
automatically determining a destination region;
automatically determining recycling requirements associated with the region; and
dynamically altering an automated packaging process in view of the recycling requirements.

2. The method of claim 1, further comprising shipping a product to a region, where the product has a package that is automatically tailored to conform to the recycling requirements of the region.

3. The method of claim 1, further comprising employing one or more sustainability scores to alter the automated packaging process.

4. A production method for managing carbon footprints, comprising:
determining a range of values for a desired carbon footprint;
analyzing product ingredients, product manufacturing methods, or product shipping methods in view of the desired carbon footprint; and
automatically adjusting an automated manufacturing process in view of the desired carbon footprint.

5. The method of claim 4, further comprising optimizing the automated manufacturing process for a lowest possible carbon footprint.

6. The method of claim 4, further comprising generating a label that indicates the carbon footprint, or
further comprising analyzing one or more sustainability scores to adjust the automated manufacturing process.

7. A method to optimize procurement and shipping systems within a supply chain, comprising:
determining an environmental impact for products manufactured on an automated product line;
analyzing current environmental conditions or models that are associated with destination locations for the products; and
automatically adjusting a procurement method or a shipping method in view of the current environmental conditions.

8. The method of claim 7, further comprising generating product shipments in view of weather conditions to mitigate environmental impacts, and/or
further comprising employing one or more sustainability scores to determine environmental impacts.

9. A method to manage regulatory compliance, comprising:
automatically analyzing one or more sustainability factors;
automatically analyzing one or more regulations in view of the sustainability factors;
and
dynamically adjusting a production process in order to substantially comply with the regulations.

10. The method of claim 9, further comprising automatically altering a product label to indicate compliance with the regulations, or
further comprising automatically adjusting the production process in order to realize a regulatory incentive or rebate, or
further comprising automatically applying a score to the sustainability factors.

11. An industrial control system, comprising:
a processor to analyze one or more sustainability factors;
a scoring component to assign a weight to the sustainability factors; and
an optimizer to automatically adjust a production process in view of the sustainability factors, the weight, and at least one of a recycling requirement, a carbon footprint, a procurement process, a shipping process, or a regulatory requirement.

12. The system of claim 1, the processor analyzes a manufacturing model that includes a bill of material, an MRP model (material requirement planning), an MES model (manufacturing execution system), an ERP model (enterprise resource planning), an S88 model, or a programming model.

13. The system of claim 12, further comprising a demand response component that employs the manufacturing model to facilitate energy management, or
further comprising a simulation component to manage energy in accordance with the manufacturing model.

14. The system of claims 11 to 13, the sustainability factors includes water usage, expected energy use, a type of energy used, a carbon emission, a recyclability factor, an environmental impact factor, a safety factor, or a utility demand factor.

15. A system for controlling an industrial process, comprising:
means for scoring one or more sustainability factors;
means for weighting the sustainability factors; and
means for adjusting a production process in view of at least one of a recycling requirement, a carbon footprint, a procurement process, a shipping process, or a regulatory requirement.
